# EUROPEAN PATENT SPECIFICATION

(11) **EP 2 573 535 B1**
(45) Date of publication and mention of the grant of the patent: **05.01.2022**
(21) Application number: 12006321.9
(22) Date of filing: 07.09.2012
(51) Int. Cl.: G01L 5/04, G01M 5/00

(54) **STRAIN SENSOR ATTACHMENT CONSTRUCTION AND STRAIN MEASUREMENT APPARATUS**
SPANNUNGSSENSORBEFESTIGUNGSKONSTRUKTION UND SPANNUNGSMESSVORRICHTUNG
CONSTRUCTION DE FIXATION DE CAPTEUR DE CONTRAINTE ET APPAREIL DE MESURE DE CONTRAINTE

(30) Priority: 22.09.2011 JP 2011208156
(43) Date of publication of application: 27.03.2013
(73) Proprietor: SUMITOMO HEAVY INDUSTRIES, LTD., Tokyo 141-6025 (JP)
(72) Inventor: Watanabe, Nobuyasu, Chiba-shi Chiba 263-0001 (JP)
(74) Representative: Wimmer, Hubert

(56) References cited:
- JP-A- 10 318 856
- JP-A- H07 198 740
- JP-A- S58 186 003
- JP-A- 2000 246 773
- JP-A- 2003 112 344
- JP-A- 2005 114 403
- SU-A1- 1 025 999

## Description

### TECHNICAL FIELD

The present invention is related to a an injection molding machine.

### BACKGROUND ART

JP 2005-114403 A discloses a strain sensor attachment construction for a strain sensor in which a magnet, which is provided such that it is attracted to a strain measured member with a magnetic force, is coupled to a carrier, and a spring which has one end acting on the strain sensor and another end acting on the carrier is provided. The carrier is attracted to the strain measured member with an attraction force of the magnet, which causes the spring to be compressed, and thus the strain sensor is pressed against a surface of the strain measured member with a restoring force of the spring.

However, according to the construction disclosed in JP 2005-114403 A, since the attraction force of the magnet is used indirectly and the strain sensor is pressed against the strain measured member with the resultant restoring force of the spring, there are problems that the construction is complicated and the number of components is great.

JP 10 318856 A discloses another strain sensor attachment construction including a pair of left and right magnets adapted for fixing the strain sensor attachment construction on a component to be measured. A strain sensor, which is in contact with the component to be measured, is located between the left and right magnets. Spike pins are provided for securely fixing the magnets to the measured component.

JP 2000 246773 A discloses a strain measuring sensor which measures a strain of a tie bar in an axial direction, and is formed in a semicircular shape, and attached to an outer peripheral surface of a uniform section sufficiently separated from threaded parts of both ends of the bar by a bolt or the like around the bar. A controller calculates a resin pressure based on an output signal of the sensor in injecting and metering steps.

EP 1 857 799 A1 discloses a tie bar strain measuring device, even if an elongation is generated in a belt for attachment, a strain gauge can be pressed against a tie bar continuously with a sufficient pressing force by absorbing the elongation. The strain gauge is fixed to a strain gauge fixing member, and a belt-like member is wound around an outer circumference of the tie bar so as to retain the strain gauge fixing member while pressing against an outer circumferential surface of the tie bar. The belt-like member is clamped by a clamping device. A clamping force is generated by a resilient restoration force of a conical plate spring provided in the clamping device.

JP 2003 112344 A discloses a mold clamping force detector. The mold clamping force detector is equipped with the frame member freely fitted to and detached from the tie bar laterally, the movable piece mounted on the frame member in a freely protruding and withdrawing state to be made possible to hold the tie bar, a frame locking elastic member energizing the movable piece to the protruding side to bring the same into contact with the side surface of the tie bar in a pressurized state and capable of locking the frame member with the tie bar through the movable piece and the sensor energizing means mounted on the frame member to hold a strain sensor and energizing the strain sensor to bring the same into contact with the side surface of the tie bar in a pressurized state.

SU 1025999 A discloses a load cell. A strain gauge containing a tensile element, fasteners installed with a relative offset by the size of the base of the strain gauge, a sensitive element, and protective sheath. The fasteners are made in the form of steel frames interconnected by flat steel springs. The load cell is mounted on the object to be measured by means of permanent magnets.

### SUMMARY OF INVENTION

Accordingly, it is an object in one aspect of the invention to provide an injection molding machine wherein a strain sensor is pressed against the strain measured member in a simplified manner and with a reduced number of components.

According to the present invention, an injection molding machine is provided as set forth in claim 1. Preferred embodiments of the present invention may be gathered from the dependent claims.

### BRIEF DESCRIPTION OF DRAWINGS

Fig. 1 is a diagram for illustrating a mold closed status of a mold clamping apparatus of an injection molding machine according to an embodiment of the present invention.
Fig. 2 is a diagram for illustrating a mold opened status of the mold clamping apparatus of the injection molding machine according to the embodiment of the present invention.
Fig. 3 is a diagram for illustrating an example of a load detector 55.
Fig. 4 is a cross-sectional view of a mounting portion of the load detector 55.
Fig. 5 is a diagram for illustrating an example of an injection apparatus 17 to which the load detector 55 is attached.

### BEST MODE FOR CARRYING OUT THE INVENITON

In the following, the best mode for carrying out the present invention will be described in detail by referring to the accompanying drawings. It is noted that, in the present embodiment, with respect to the mold clamping apparatus, a forward direction corresponds to a moving direction of a movable platen at the time of the mold closing, and a backward direction corresponds to a moving direction of the movable platen at the time of the mold opening. Further, with respect to the injection apparatus, a forward direction corresponds to a moving direction of a screw at the time of the injection, and a backward direction corresponds to a moving direction of the screw at the time of the metering.

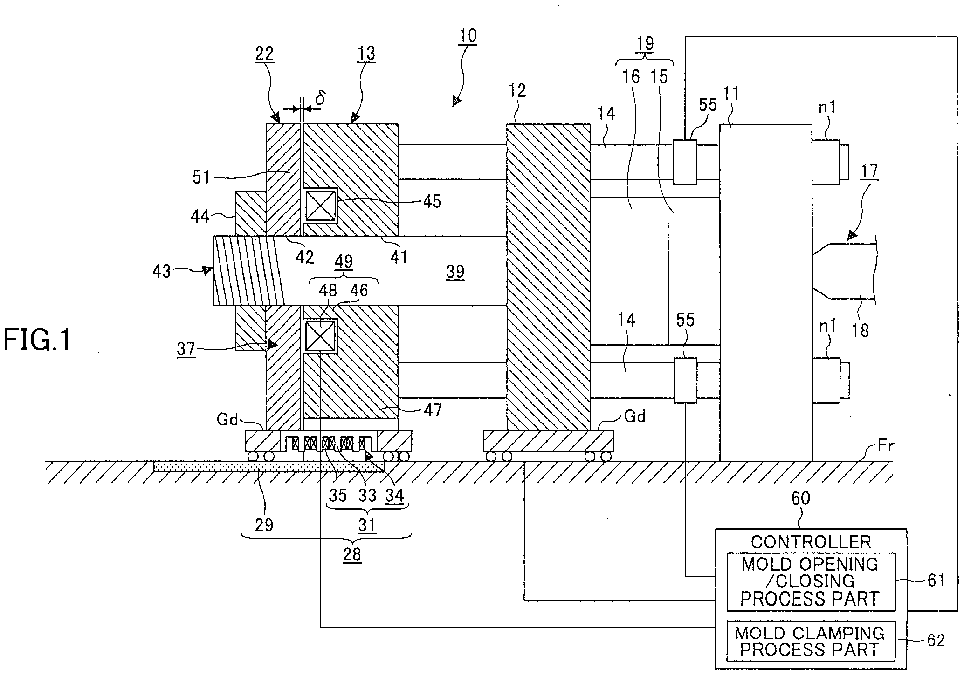

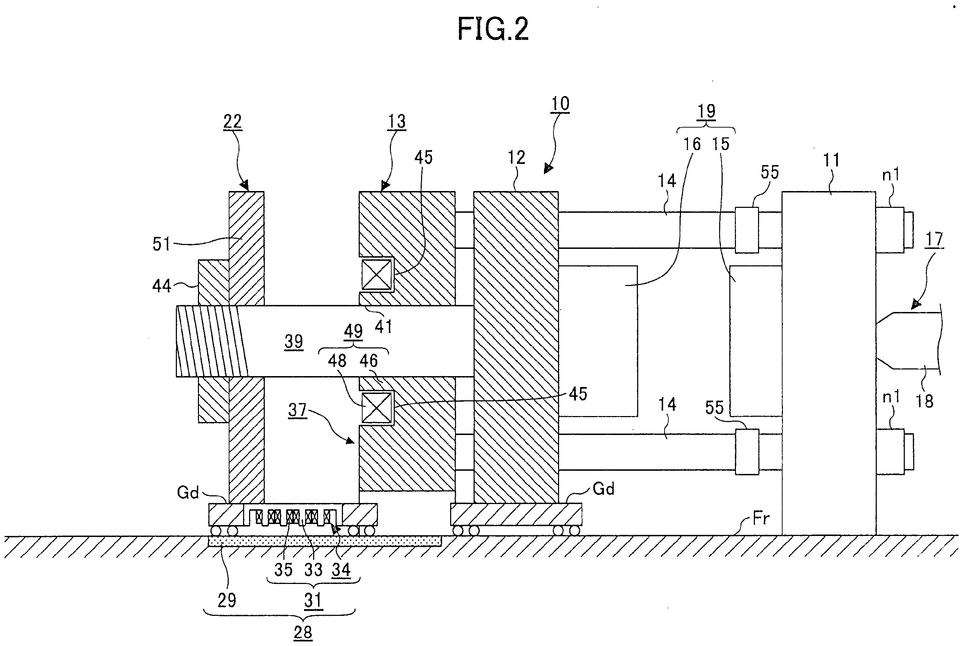

Fig. 1 is a diagram for illustrating a mold closed status of a mold clamping apparatus of an injection molding machine according to an embodiment of the present invention, and Fig. 2 is a diagram for illustrating a mold opened status of the mold clamping apparatus of the injection molding machine according to the embodiment of the present invention. It is noted that, in Figs. 1 and 2, members with hatch patterns are illustrated with their fundamental sections.

In Figs. 1 and 2, a reference numeral 10 indicates a mold clamping apparatus, Fr indicates a frame (chassis) of the injection molding machine, Gd indicates a guide which is movable with respect to the frame Fr, and a reference numeral 11 indicates a stationary platen which is provided on a guide (not shown) or the frame Fr. A rear platen 13 is provided such that it is opposed to the stationary platen with a predetermined spacing. Four tie bars 14 (only two tie bars are illustrated in the drawings) extend between the stationary platen 11 and the rear platen 13. It is noted that the rear platen 13 is fixed with respect to the frame Fr.

Tie bars 14 have front ends (right ends in the drawings) on which screwed portions (not show) are formed. The front ends of the tie bars 14 are fixed to the stationary platen 11 by tightening nuts n1 on the screwed portions. The rear ends of the tie bars 14 are fixed to the rear platen 13.

A movable platen 12 is provided such that it is opposed to the stationary platen 11 along the tie bars and movable in a mold opening/closing direction. For this reason, the movable platen 12 is fixed to the guide Gd, and openings or notches are formed in the movable platen 12 such that the tie bars pass through the openings or notches. It is noted that to the guide Gd is fixed to an attraction plate 22. As illustrated in the drawings, the guide Gd may be separated to guide the attraction plate 22 and the movable platen 12, respectively, or may be an integrated piece common to the attraction plate 22 and the movable platen 12.

Further, a stationary mold (die) 15 is fixed to the stationary platen 11 and a movable mold 16 is fixed to the movable platen 12. Movements of the movable platen in a forward or backward direction cause the stationary platen 11 and the movable mold 16 to come close to each other or come apart from each other, and thus the mold closing, the mold clamping and the mold opening are performed. As the mold clamping is performed, a cavity space (not illustrated) is formed between the stationary mold 15 and the movable mold 16, and the cavity space is filled with a resin (not illustrated) injected from an injection nozzle of the injection apparatus 17. Further, a mold apparatus 19 is configured by the stationary mold 15 and the movable mold 16.

The attraction plate 22 is fixed to the guide Gd such that it is parallel to the movable platen 12. With this arrangement, the attraction plate 22 is capable of moving in the forward and backward directions at the back of the rear platen 13. The attraction plate 22 is formed by a magnetic material. For example, the attraction plate 22 is configured by a laminated electromagnet steel plate which is formed by laminating thin plates made of a ferromagnetic substance. Alternatively, the attraction plate 22 may be formed by casting.

A linear motor 28 is provided on the guide Gd for moving the movable platen 12 in the forward and the backward directions. The linear motor 28 includes a stator 29 and a moving element 31. The stator 29 is provided on the frame Fr such that it is parallel to the guide Gd and extends over a moving range of the movable platen 12. The moving element 31 is provided at the lower end of the movable platen 12 such that it is opposed to the stator 29 and extends over a predetermined range.

The moving element 31 includes a core 34 and a coil 35. The core 34 includes plural magnetic pole teeth 33 which are formed with a predetermined spacing and are projected toward the stator 29. The coil 35 is wound around the respective magnetic pole teeth 33. It is noted that the magnetic pole teeth 33 are formed in a direction perpendicular to the moving direction of the movable platen 12 such that they are parallel to each other. The stator 29 includes a core (not illustrated), and a permanent magnet (not illustrated) which is provided on the core. The permanent magnet is formed by performing magnetization of the respective magnetic poles of North pole and South pole alternately. When the linear motor 28 is driven by supplying a predetermined current to the coil 35, the moving element 31 is moved in the forward or backward direction, which causes the movable platen 12 to be moved in the forward or backward direction by the guide Gd, thereby enabling the mold closing or the mold opening.

It is noted that, in the embodiment, the permanent magnet is provided in the stator 29 and the coil 35 is provided in the moving element 31; however, a permanent magnet may be provided in a stator and a coil may be provided in a moving element. In this case, since the coil is not moved when the linear motor 28 is driven, wiring for supplying the electric power to the coil can be installed easily.

It is noted that instead of fixing the movable platen 12 and the attraction plate 22 to the guide Gd, the moving element 31 of the linear motor 28 may be provided in the movable platen 12 or the attraction plate 22. Further, instead of using the linear motor 28, a hydraulic actuator, an electric motor, etc, may be used.

When the movable platen 12 is moved in the forward direction and the movable mold 16 is abutted against the stationary mold 15, the mold closing is performed and then the mold clamping is performed. An electromagnet unit 37 for performing the mold clamping is provided between the rear platen 13 and the attraction plate 22. Further, a center rod 39, which extends through the rear platen 13 and the attraction plate 22 and connects the movable platen 12 and the attraction plate 22, is provided such that it can be moved in the forward and backward directions. The center rod 39 moves the attraction plate 22 in the forward and backward directions in synchronization with the moving of the movable platen 12 in the forward and backward directions at the time of the mold closing and the mold opening. The center rod 39 transmits the attraction force generated by the electromagnet unit 37 to the movable platen 12 at the time of the mold clamping.

It is noted that the mold clamping apparatus 10 is configured by the stationary platen 11, the movable platen 12, the rear platen 13, the attraction plate 22, the linear motor 28, the electromagnet unit 37, the center rod 39, etc.

The electromagnet unit 37 includes an electromagnet 49 formed in the rear platen 13 and an attraction portion 51 formed in the attraction plate. Further, a groove 45 is formed at a predetermined part of the rear end surface of the rear platen 13. The predetermined part is around the center rod 39 in the embodiment. A core 46 is formed at the inner side of the groove 45 and a yoke 47 is formed at the outer side of the groove 45. A coil 48 is wound around the core 46 in the groove 45. It is noted that the core 46 and the yoke 47 are formed integrally as a casting; however, the core 46 and the yoke 47 may be formed as a laminated electromagnet steel plate by laminating thin plates made of a ferromagnetic substance.

It is noted that in the embodiment the electromagnet 49 may be provided independently from the rear platen 13 and the attraction portion 51 may be provided independently from the attraction plate 22. Further, the electromagnet 49 may be a part of the rear platen 13 and the attraction portion 51 may be a part of the attraction plate 22. Further, a positional relationship between the electromagnet and the attraction portion may be reversed. For example, the electromagnet 49 may be provided in the attraction plate 22 and the attraction portion may be provided in the rear platen 13.

When the current is applied to the coil 48 in the electromagnet unit 37, the electromagnet 49 is driven to attract the attraction force, thereby generating a clamping force.

The center rod 39 is coupled to the attraction plate 22 at its rear end portion and is coupled to the movable platen 12 at its front end portion. Thus, the center rod 39 is moved in the forward direction together with the movable platen to move the attraction plate 22 in the forward direction at the time of the mold closing, and is moved in the backward direction together with the movable platen to move the attraction plate 22 in the backward direction at the time of the mold opening. For this reason, a hole 41 through which the center rod 39 passes is formed at the center of the rear platen 13.

The driving of the linear motor 28 and the electromagnet 49 of the mold clamping apparatus 10 is controlled by a controller 60. The controller 60 includes a CPU, a memory, etc. The controller 60 also includes a circuit for applying the current to the coil 35 of the linear motor 28 and the coil 48 of the electromagnet 49 according to calculation results of the CPU. The controller 60 is coupled to a load detector 55. The load detector 55 is provided at a predetermined location of at least one tie bar 14 (a predetermined location between the stationary platen 11 and the rear platen 13) of the mold clamping apparatus 10 to detect a load applied to the tie bar 14. In the illustrated example, two load detectors 55 are provided on two tie bars 14 which are located on upper and lower sides. The load detector 55 is a sensor for detecting an elongation of the tie bar 14, for example. The load (strain) detected by the load detector 55 is transmitted to the controller 60. The controller 60 detects the mold clamping force based on the output of the load detector 55. It is noted that the illustration of the controller 60 is omitted in Fig. 2.

It is noted that, in the illustrated embodiment, a mold space adjusting mechanism 44 is provided at the back of the attraction plate 22. The mold space adjusting mechanism 44 is a mechanism for adjusting a relative position (i.e., a distance) between the movable platen 12 and the attraction plate 22 according to the thickness of the mold apparatus 19. A configuration of the mold space adjusting mechanism 44 itself may be arbitrary. For example, the mold space adjusting mechanism 44 changes the position of the center rod 39 with respect to the attraction plate 22 with a mold space adjusting motor (not illustrated). With this arrangement, the position of the center rod 39 with respect to the attraction plate 22 is adjusted and thus the position of the movable platen 12 with respect to the stationary platen 11 is changed. In other words, the mold space is adjusted by changing the relative position between the movable platen 12 and the attraction plate 22.

Next, the operation of the mold clamping apparatus 10 is described.

A mold closing process is controlled by a mold opening/closing process part 61. In a status (i.e., a mold opening status) illustrated in Fig. 2, the mold opening/closing process part 61 supplies the current to the coil 35. Then, the linear motor 28 is driven to move the movable platen 12 in the forward direction, and thus the movable mold 16 is abutted against the stationary mold 15, as illustrated in Fig. 1. At that time, a gap δ is formed between the rear platen 13 and the attraction plate 22, that is to say, between the electromagnet 49 and the attraction portion 51. It is noted that the force required for the mold closing is sufficiently smaller than the mold clamping force.

Then, a mold clamping process part 62 of the controller controls a mold clamping process. The mold clamping process part 62 supplies the current to the coil 48 to attract the attraction portion 51 with the attraction force of the electromagnet 49. Accordingly, the mold clamping force is transmitted to the movable platen 12 via the attraction plate 22 and the center rod 39, and thus the mold clamping is performed. When the mold clamping process part 62 changes the mold clamping force, such as at the time of stating the mold clamping, it performs such control that the current of a stationary value required to generate a target mold clamping force to be obtained by the change, that is to say, a target mold clamping force in a stationary status is supplied to the coil 48.

It is noted that the mold clamping force is detected by the load detector 55. The detected mold clamping force is transmitted to the controller 60 where a feedback control is performed by adjusting the current to be supplied to the coil 48 such that the mold clamping force follows a setting value. During this period, the resin melted in the injection apparatus 17 is injected from the injection nozzle 18 and the cavity space of the mold apparatus 19 is filled with the resin.

When the resin in the cavity space is cooled to set, the mold opening/closing process part 61 controls a mold opening process. The mold clamping process part 62 stops supplying the current to the coil 48 in the status illustrated in Fig. 1. Accordingly, the linear motor 28 is driven to move the movable platen 12 in the backward direction, and then the movable mold 16 is located at the rearmost position, as illustrated in Fig. 2, where the mold opening process is performed.

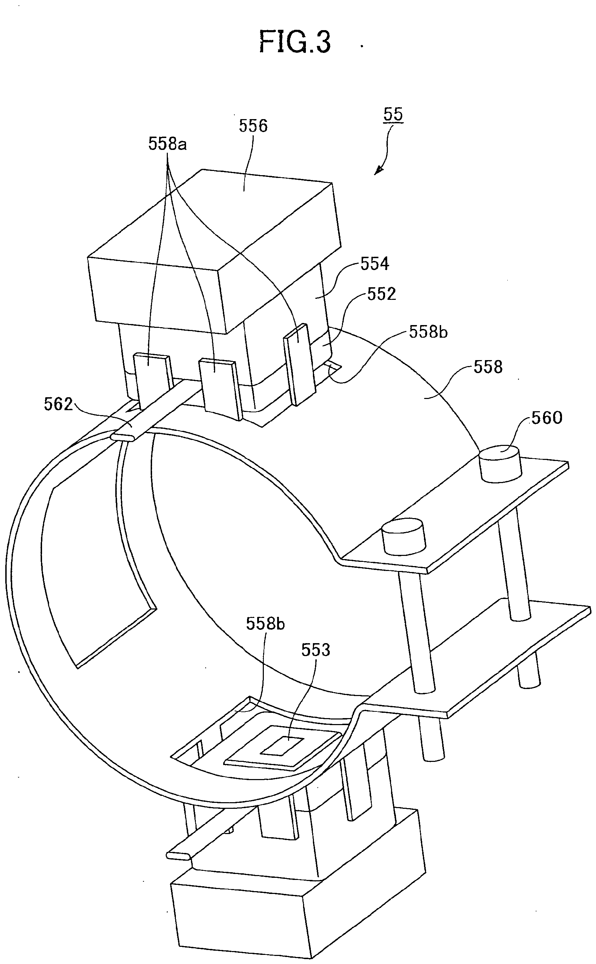

Next, with reference to Figs. 3 through 5, features of the present invention are described.

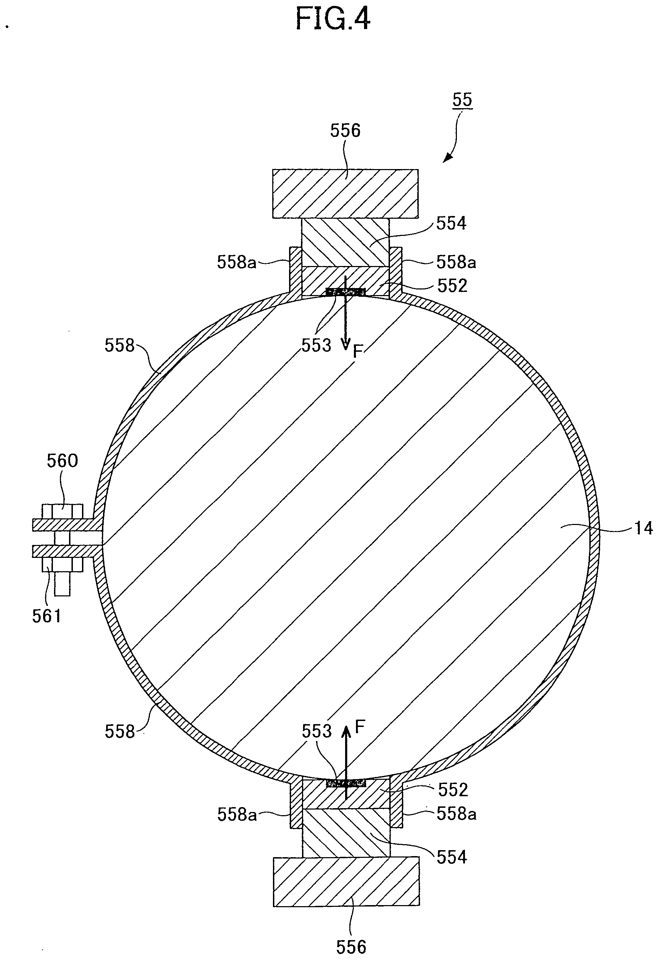

Fig. 3 is a diagram for illustrating an example of the load detector 55. Fig. 4 is a cross-sectional view of a mounting portion of the load detector 55. It is noted that the load detectors 55 are provided on the tie bars 14, as described above. Thus, in the example, the tie bar 14 corresponds to "a strain measured member". In the illustrated example, the load detectors 55 are provided at a diagonal position around the tie bar 14.

The load detector 55 includes a strain sensor 553. The strain sensor 553 is a sensor for measuring the strain of the strain measured member (the tie bar 14 in this example) . The strain sensor 553 may be a strain gauge, a semiconductor gauge, a wire gauge or the like.

In the illustrated example, the strain sensor 553 is carried on a metal plate 552 by an adhesive via an elastic member such as a robber or the like. It is noted that the metal plate 552 may be replaced with a plate member made of a non-magnetic material such as aluminum, plastics or the like. The metal plate 552 may have an adjustment resistor or the like installed therein; however, these elements may be omitted. Further, the strain sensor 553 is coupled to a signal line 562 (see Fig. 3) which is coupled to the controller 60. The signal line 562 may be a shield line or a simple line other than the shield line.

The load detector 55 includes a magnet (a permanent magnet) 554 provided such that it is attracted to the tie bar 14 with a magnetic force. The magnet 554 has a function of pressing the strain sensor 553 against the surface of the tie bar 14 with the attraction force thereof. In other words, as indicated by an arrow in Fig. 4, the attraction force F is generated between the magnet 554 and the tie bar 14 in such a direction that the magnet 554 is attracted to the tie bar 14. The strain sensor 553 is pressed against the surface cf the tie bar 14 utilizing this attraction force F. With this arrangement, a pressing force necessary for the measurement of the strain can be implemented between the strain sensor 553 and the surface of the tie bar 14. It is noted that in order to assure the necessary attraction force F, the magnet 554 may include a yoke 556 made of a magnetic substance. The yoke 556 is integrally coupled to the magnet 554.

More specifically, the strain sensor 553 is provided between the surface of the tie bar 14 and the magnet 554. The magnet 554 is overlaid on the metal plate 552 from the outer side in a radius direction of the tie bar 14. With this arrangement, the attraction force F can be applied to the strain sensor 553 in a substantially direct manner. Therefore, it is possible to omit a spring which is used in the prior art and implement a simplified configuration with reduced number of the components.

It is preferred that the magnet 554 has substantially the same outline as the metal plate 552. With this arrangement, registration of the magnet 554 and the metal plate 552 can be performed simultaneously with a wall portion 558 of a bracket 558 describe hereinafter.

It is preferred that the load detectors 55 are attached to the tie bar 14 with a bracket 558. The bracket 558 is a ring-shaped member which surrounds the tie bar 14 along the surface of the tie bar 14, as illustrated in Fig. 4. The bracket 558 may have flexibility. The bracket 558 may be attached around the tie bar 14 by coupling opposite ends with bolts 560 and nuts 561. It is preferred that the bracket 558 includes an opening 558b corresponding to the outline of the metal plate 552 (more precisely, an opening 558b slightly greater than the outline of the metal plate 552) and a wall portion 558a formed around the opening 558b such that it extends in a direction away from the surface of the tie bar 14. It is preferred that the wall portion 558a is formed integrally with the bracket 558. For example, the wall portion 558a may be formed by the bending of the bracket 558.

The wall portion 558a may be provided over the whole circumference of the opening 558b, or may be provided at plural spaced locations around the opening 558b as illustrated in the drawings. In the illustrated example, two wall portions 558a are provided at the side where the signal line 562 is taken out such that these wall portions 558a have a spacing therebetween for taking out the signal line 562, and a wall portion 558a is provided at each of other three sides. However, the positions or the number of the wall portions 558a are arbitrary. However, it is preferred that the positions or the number of the wall portions 558a are determined such that the wall portions 558a can be formed integrally with the bracket 558 and have a spacing therebetween for taking out the signal line 562.

The respective wall portions 558a around the opening 558b cooperate to implement a function of registering the metal plate 552 and the magnet 554 as illustrated in Fig. 3 and Fig. 4.

At the time of assembling, at first, the bracket 558 is attached to the surface of the tie bar 14. Then, the metal plate 552 is inserted in a space surrounded by the wall portions 553a of the bracket 558. At that time, the metal plate 552 is movable in a radius direction of the tie bar 14 with respect to the surface of the tie bar 14 because the outline of the metal plate 552 is slightly smaller than the opening 558b. Then, the integrated piece of the magnet 554 and the yoke 556 is installed. At that time, the installation is performed such that the magnet 554 enters the space surrounded by the wall portions 558a of the bracket 558. An additional member for holding the integrated piece of the magnet 554 and the yoke 556 is not necessary because the magnet 554 which is provided on the metal plate 552 is attracted to the tie bar 14. Further, the metal plate 52 is not movable in a radius direction of the tie bar 14 with respect to the surface of tie bar 14 because the magnet 554 is attracted to the tie bar 14. Further, with the attraction force which attracts the magnet 554 to the tie bar 14, a pressing force necessary for the measurement of the strain of the tie bar 14 can be implemented between the strain sensor 553 and the surface of the tie bar 14. In this way, the load detector 55 can be installed to the tie bar 14 with a simplified install process. It is noted that the magnet 554, the yoke 556 and the metal plate 552 (and the strain sensor 553 carried therein) may be assembled before the installation, and then they may be installed in the space surrounded by the wall portions 558a of the bracket 558 in the assembled status.

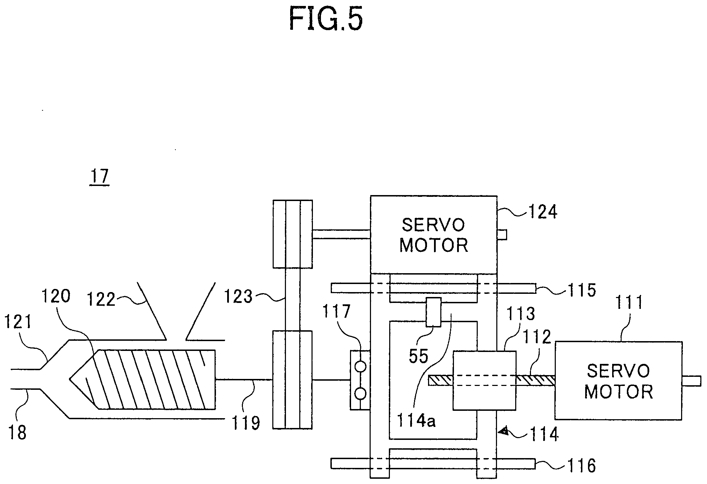

It is noted that the strain measured member is the tie bar 14 in the embodiment described above; however, the strain measured member may be arbitrary and the type of loads detected based on the measured strain may be arbitrary. For example, the strain measured member may be the center rod 39. Further, the cross section of the strain measured member is not necessarily a circle, and it may be a rectangular, a polygonal shape, etc. Further, the strain measured member may not be a component of an apparatus of the injection molding machine other than the mold clamping apparatus. For example, as illustrated in Fig. 5, the load detector 55 may be attached to the frame 114a of the injection apparatus 17 in the same manner as describe above.

Here, the general outlines of the injection apparatus 17 illustrated in Fig. 5 are described. The injection apparatus 17 includes a servo motor for injection 111. The rotation of the servo motor for injection 111 is transmitted to a ball screw 112. A nut 113, which is moved in the forward and backward directions by the rotation of the ball screw 112, is fixed to a pressure plate 114. The pressure plate 114 is configured to be movable along guide bars 115 and 116 which are fixed to a base frame (not illustrated). The motion of the pressure plate 114 in the forward and backward directions is transmitted to a screw 120 via a bearing 117 and an injection shaft 119. The screw 120 is disposed in a heating cylinder 121 such that it can rotate in the heating cylinder 121 and can move in an axial direction. A hopper 122 for supplying a resin is provided in a rear portion of the screw 120 in the heating cylinder 121. The rotational motion of a servo motor for screw rotation 124 is transmitted to the injection shaft 119 via coupling members 123 such a belt, a pulley, etc. In other words, the screw 120 is rotated when the injection shaft 119 is driven to rotate by the servo motor for screw rotation 124. In a plasticizing/metering process, the screw 120 is rotated and moved backward in the heating cylinder 121, thereby molten resin is stored in front of the screw 120, that is to say, on the side of the injection nozzle 18 of the heating cylinder 121. In an injecting process, molds (dies) are filled with the molten resin stored in front of the screw 120, and molding is performed by applying a pressure. At that time, a force pressing the resin is detected by the load detector 55 as a reaction force. In other words, a resin pressure in front of the screw 20 is detected. The detected pressure is input to the controller 60. Further, in a holding process, the pressure of the resin filling in the molds is held at a predetermined pressure.

It is noted that, in the example illustrated in Fig. 5, the load detector 55 is attached to the frame 114a of the pressure plate 114; however, the load detector 55 may be attached to any portions to which the axial force is applied in the same manner.

The present invention is disclosed with reference to the preferred embodiments. However, it should be understood that the present invention is not limited to the above-described embodiments, and variations and modifications may be made without departing from the scope of the present invention.

For example, in the foregoing, a particular configuration of the mold clamping apparatus 10 is described as an example; however, the mold clamping apparatus 10 may have any configuration for performing the mold clamping with the electromagnet. Further, the mold clamping apparatus 10 may perform the mold clamping without utilizing the electromagnet. The mold clamping apparatus 10 may be a configuration including a toggle mechanism or a hybrid configuration of a toggle type and an electric type. In these cases, the load detector 55 can be provided in the tie bar, etc., in the same manner as described above.

## Claims

1. An injection molding machine comprising:
a strain sensor (553),
a strain measured member (14) whose strain is to be measured, the strain sensor (553) being attached to the strain measured member (14),
a magnet (554) provided such that it is attracted to the strain measured member (14) with a magnetic force, and
a plate (552) which carries the strain sensor (553),
wherein the magnet (554) is provided on the plate (552), and
wherein the strain sensor (553) is provided between a surface of the strain measured member (14) and the magnet (554).

2. The injection molding machine of claim 1, wherein the plate (552) is a metal plate.

3. The injection molding machine of claim 2, wherein the metal plate (552) has an outline corresponding to that of the magnet (554).

4. The injection molding machine of claim 3, further comprising:
a bracket (558) surrounding the surface of the strain measured member (14) in a circumferential direction,
wherein the bracket (558) includes
an opening (558b) corresponding to an outline of the metal plate (552); and
a wall portion (558a) formed around the opening (558b) such that it extends in a direction away from the surface of the strain measured member (14).

## Patentansprüche

1. Spritzgussmaschine, die Folgendes aufweist:
einen Dehnungssensor (553),
ein bezüglich Dehnung gemessenes Element (14), dessen Dehnung gemessen werden soll, wobei der Dehnungssensor (553) an dem bezüglich Dehnung gemessenem Element (14) befestigt ist,
einen Magneten (554), der so vorgesehen ist, dass er zu dem bezüglich Dehnung gemessenem Element (14) mit einer Magnetkraft hingezogen wird, und
eine Platte (552), die den Dehnungssensor (553) trägt, wobei der Magnet (554) auf der Platte (552) vorgesehen ist, und
wobei der Dehnungssensor (553) zwischen einer Oberfläche des bezüglich Dehnung gemessenen Elementes (14) und dem Magneten (554) vorgesehen ist.

2. Spritzgussmaschine nach Anspruch 1, wobei die Platte (552) eine Metallplatte ist.

3. Spritzgussmaschine nach Anspruch 2, wobei die Metallplatte (552) einen Umriss entsprechend jenem des Magneten (554) hat.

4. Spritzgussmaschine nach Anspruch 3, die weiter Folgendes aufweist:
einen Bügel (558), der die Oberfläche des bezüglich Dehnung gemessenen Elementes (14) in einer Umfangsrichtung umgibt,
wobei der Bügel (558) Folgendes aufweist:
eine Öffnung (558b), die dem Umriss der Metallplatte (552) entspricht; und
einen Wandteil (558a), der um die Öffnung (558b) so geformt ist, dass er sich in einer Richtung weg von der Oberfläche des bezüglich Dehnung gemessenen Elementes (14) erstreckt.

## Revendications

1. Machine de moulage par injection comprenant :
un capteur de contrainte (553),
un élément de mesure de contrainte (14) dont la contrainte doit être mesurée, le capteur de contrainte (553) étant fixé à l'élément de mesure de contrainte (14),
un aimant (554) prévu de sorte qu'il soit attiré vers l'élément de mesure de contrainte (14) par une force magnétique, et
une plaque (552) qui porte le capteur de contrainte (553),
dans laquelle l'aimant (554) est prévu sur la plaque (552), et
dans laquelle le capteur de contrainte (553) est prévu entre une surface de l'élément de mesure de contrainte (14) et l'aimant (554).

2. Machine de moulage par injection selon la revendication 1, dans laquelle la plaque (552) est une plaque métallique.

3. Machine de moulage par injection selon la revendication 2, dans laquelle la plaque métallique (552) a un contour correspondant à celui de l'aimant (554).

4. Machine de moulage par injection selon la revendication 3, comprenant en outre :
un support (558) entourant la surface de l'élément de mesure de contrainte (14) dans une direction circonférentielle,
dans laquelle le support (558) comporte
une ouverture (558b) correspondant à un contour de la plaque métallique (552) ; et
une partie de paroi (558a) formée autour de l'ouverture (558b) de sorte qu'elle s'étende dans une direction éloignée de la surface de l'élément de mesure de contrainte (14).
